# FASCICULE DE BREVET EUROPEEN

(11) **EP 4 067 827 B1**
(45) Date de publication et mention de la délivrance du brevet: **29.05.2024**
(21) Numéro de dépôt: 22164677.1
(22) Date de dépôt: 28.03.2022
(51) Int. Cl.: B64D 43/00, G01M 9/06, G01P 5/14

(54) **DISPOSITIF DE MESURE A CAPTEURS EN SUSPENSION**
MESSVORRICHTUNG MIT SENSOREN IN SUSPENSION
MEASUREMENT DEVICE WITH SUSPENDED SENSORS

(30) Priorité: 30.03.2021 FR 2103283
(43) Date de publication de la demande: 05.10.2022
(73) Titulaire: AIRBUS OPERATIONS (S.A.S.), 31060 Toulouse (FR)
(72) Inventeur: DUPE, Nicolas, 31060 Toulouse (FR); JEAN, Nicolas, 31060 Toulouse (FR); DAJEAN, Cyrille, 31060 Toulouse (FR)
(74) Mandataire: Jardel, Marc Henry Philippe

(56) Documents cités:
- EP-A1- 0 813 049
- EP-A2- 1 190 924
- WO-A2-2015/091991
- US-A1- 2011 146 425

## Description

La présente invention concerne un dispositif de mesure susceptible d'être accolé sur une paroi d'un objet mobile ou d'un objet fixe se trouvant dans un écoulement de fluide pour mesurer des grandeurs physiques. Plus particulièrement, la présente invention s'applique à la mesure de paramètres utilisés pour caractériser un écoulement d'air à la surface d'un aéronef.

Lors d'essais en vol, des capteurs sont montés sur la surface extérieure d'un aéronef pour effectuer différents types de mesure. L'étude des résultats permet de comprendre le comportement d'un aéronef en vol et d'en améliorer ou valider les performances. Selon une application particulière, il est possible par exemple de détecter et localiser des phénomènes aérodynamiques sur l'aéronef.

On connait de la demande de brevet FR3015756 un dispositif de mesure comprenant un support présentant des logements pourvu d'une ouverture débouchant vers l'extérieur au niveau de la face libre du support dans lesquels sont prévus des capteurs. Le support comprend une cavité réalisée au niveau de la face du support destiné à être apposée sur une paroi et opposée à la face libre dans laquelle débouche les logements et dans laquelle se trouve un circuit imprimé flexible sur lequel sont connectés les capteurs. Le logement du capteur est fermé par un film : le film assure au dispositif de mesure une forme aérodynamique mais ajoute une couche supplémentaire dont la fixation doit être assurée.

La présente invention a pour but de simplifier l'architecture d'un dispositif de mesure tout en assurant une surface extérieure aérodynamique ne perturbant pas l'écoulement.

A cet effet, la présente invention concerne un dispositif de mesure destiné à être accolé sur une paroi d'un objet mobile ou d'un objet fixe se trouvant dans un écoulement comprenant un support présentant des logements dans lesquels sont logés des capteurs, le support présentant une face libre et une face destinée à venir en contact avec la dite paroi, la face libre étant la face opposée à celle destinée à venir en contact avec ladite paroi, le dispositif comprenant une cavité dans laquelle se trouve un circuit imprimé, les logements étant pourvus d'une ouverture débouchant vers l'extérieur du support dans ladite cavité, caractérisé en ce que la cavité est réalisée au niveau de la face libre à savoir qu'elle débouche dans celle-ci et en ce que le circuit est disposé à l'envers dans la cavité, à savoir la face imprimée vers l'intérieur du support, les capteurs fixés au circuit se trouvant en suspension dans les logements.

De cette manière, la surface en contact avec l'écoulement est la plus lisse et plane possible ; le nombre de couche nécessaire pour constituer le dispositif est également réduit.

L'invention prévoit au moins l'une des caractéristiques optionnelles suivantes, prises isolément ou en combinaison.

Un film micro respirant laissant passer l'air et étanche à l'eau et susceptible de drainer les charges électrostatiques vers ledit objet recouvre l'ensemble des faces libre et latérales du support.

Le film est fixé à la paroi à l'aide d'un ruban adhésif double face conducteur pour drainer les charges électrostatiques.

Le film est un matériau aluminium tissé à mailles de taille microscopique.

Le film est fait d'une seule pièce.

Le circuit imprimé présente des orifices au droit de chaque cavité.

La présente invention concerne également un objet fixe ou mobile présentant une paroi se trouvant dans un écoulement pourvue d'au moins un dispositif de mesure présentant l'une ou plusieurs des caractéristiques présentées ci-dessus.

L'invention prévoit au moins l'une des caractéristiques optionnelles suivantes, prises isolément ou en combinaison.

Le support est fixé à ladite paroi à l'aide d'un ruban adhésif double face silicone acrylique non conducteur.

Il s'agit d'un aéronef.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue partielle de dessus d'un aéronef sur la voilure duquel un système de mesure selon la présente invention est installé ;
[Fig. 2] est une vue schématique simplifiée de l'agencement de composants électroniques et des liaisons entre lesdits composants selon une forme de réalisation du système de mesure selon la présente invention ; pour des raisons de simplification, l'ensemble des composants et liaisons n'est pas représenté ;
[Fig. 3] est une vue schématique simplifiée en coupe transversale d'un dispositif de mesure d'un système selon la présente invention.

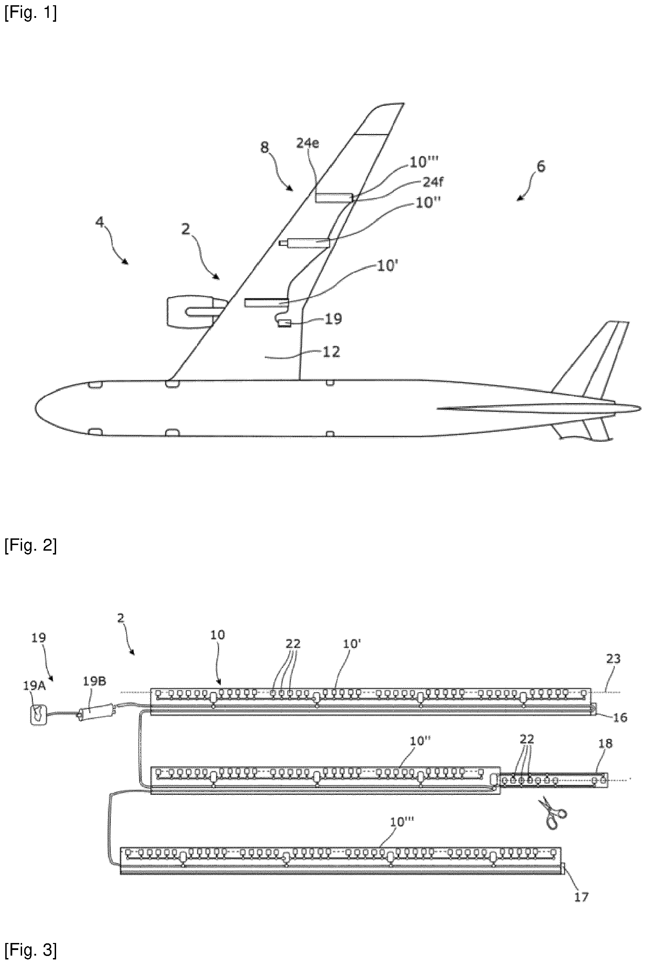

Selon une application illustrative représentée sur les figures 1 et 2, le système 2 de mesure selon la présente invention équipe une zone 4 déterminée d'un aéronef 6 : dans l'exemple illustré, le système est mis en place sur la voilure 8. Selon la forme illustrée, le système 2 présente plusieurs parties, la troisième partie étant optionnelle. La première partie consiste en un dispositif 10 de mesure de différentes grandeurs physiques susceptible d'être accolé sur une paroi 12 à l'extérieur de l'aéronef et dans l'exemple comme vu plus haut sur la paroi extérieure de la voilure 8 de l'aéronef 6. Un système 2 de mesure peut comprendre un ou plusieurs dispositifs 10 de mesure désignés sur les figures 1 et 2 par les références 10', 10", 10"', les dispositifs 10 de mesure étant liés de manière à former une chaîne de dispositifs permettant d'effectuer des mesures sur une surface étendue. La deuxième partie termine un dispositif 10 de mesure soit par un dispositif 16 de rebouclage soit par un dispositif 17 d'extrémité. Le dispositif 16 de rebouclage permet d'assurer la liaison entre les bus débouchant du support comme il sera vu plus loin. Le dispositif 17 d'extrémité termine le dernier dispositif 10 de mesure d'une chaine de dispositifs 10 de mesure : il comprend une impédance de bout de ligne permettant d'assurer la terminaison de la ligne électrique réalisée par la succession de dispositifs de mesure. La troisième partie consiste en un dispositif 18 d'extension également prévu en bout de dispositif de mesure. A l'extrémité d'un dispositif de mesure, se trouve soit un dispositif 16 de rebouclage soit un dispositif 17 d'extrémité soit un dispositif 18 d'extension. Le dispositif 18 d'extension consiste en un dispositif qui, comme le dispositif 10 de mesure, est susceptible de réaliser des mesures. Cependant, il ne présente pas toutes les caractéristiques d'un dispositif 2 de mesure : il est sécable de manière à adapter la longueur du dispositif 10 de mesure auquel il est associé à l'environnement dans lequel il est installé. La quatrième partie consiste en une unité 19 centrale d'alimentation du ou des dispositifs de mesure 10 et d'extension 18 ainsi que d'acquisition des signaux en provenance dudit ou desdits dispositifs 10 de mesure et d'extension 18. L'unité 19 d'alimentation et d'acquisition est située soit au contact d'un dispositif 10 de mesure soit à distance de celui-ci. L'unité 19 se trouve à l'intérieur de l'aéronef et dans l'exemple illustré à l'intérieur de la voilure. L'unité 19 peut être formée d'un seul bloc ou de plusieurs comme dans la forme illustrée dans laquelle elle comprend une unité 19A d'alimentation et une unité 19B d'acquisition indépendante, les unités 19A et 19B étant connectées. En effet, l'unité 19A d'alimentation peut être une source d'alimentation déjà existante de l'aéronef. Le système 2 de mesure comprend successivement l'unité 19 d'alimentation et d'acquisition, un ou plusieurs dispositifs 10'-10'" de mesure et un ou plusieurs dispositifs 16 d'extrémité et/ou d'extension 18. On s'intéresse ici à l'architecture du dispositif de mesure.

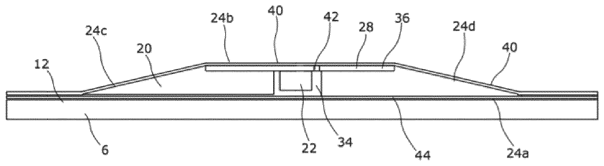

Le dispositif 1 de mesure représenté sur la figure 3 en coupe transversale se présente sous la forme d'un support 20 de capteurs 22 souple permettant d'épouser les contours de l'aéronef 6. Chaque capteur est susceptible de mesurer des grandeurs physiques telles que à titre illustratif et non limitatif la pression, la température, l'accélération, les efforts mécaniques ... Les capteurs 22 peuvent être regroupés dans des unités permettant de faire la mesure de plusieurs grandeurs et par exemple dans un microsystème électromécanique appelé MEMS. Les unités de mesure multi-paramètres de type MEMS seront appelés dans ce qui suit capteur 22. Le support 20 a pour fonction d'offrir un carénage aux capteurs ne nécessitant de ce fait aucune enveloppe particulière et de maintenir les capteurs au plus près de la paroi sur laquelle le dispositif de mesure est disposé pour effectuer les mesures. Le support peut être réalisé en matériau polymère par exemple en polyuréthane ou silicone souple pour épouser les contours de l'aéronef. Ce matériau permet également d'absorber les contraintes thermiques. Il peut être réalisé par extrusion, moulage, usinage ou tout autre procédé de fabrication connu.

Le support 20 peut présenter tout type de forme. Dans l'exemple illustré sur la figure 3, le support présente une forme longiligne de section transversale trapézoïdale. Comme indiqué, le support pourrait se présenter sous une autre forme. Les capteurs 22 sont logés dans la partie centrale du support de plus grande épaisseur. Le support 20 présente six faces : Une première face 24a destinée à venir en contact avec la paroi de l'aéronef - Une deuxième face 24b libre, parallèle et opposée à la face 24a destinée à être soumise à l'écoulement, à se trouver dans l'écoulement - Deux faces 24c, 24d latérales formant les bords du support 20. Les bords du support 20 présentent une épaisseur décroissante et une forme triangulaire en section transversale (comme le montre la figure 3) permettant d'offrir une surface perturbant très faiblement l'écoulement aérodynamique - Deux faces 24e, 24f visibles sur la figure1 forment les extrémités du support. L'une des faces 24e est destinée à se connecter à une unité 19 d'alimentation et d'acquisition ou à un autre dispositif 10 de mesure. L'autre face 24f est destinée à se connecter à un dispositif 16 de rebouclage, un dispositif 17 d'extrémité ou à un dispositif 18 d'extension. D'autres formes de réalisation avec des chainages différents sont possibles comme celle du brevet susmentionnée. Selon une forme de réalisation, les faces 24e et 24f sont parallèles entre elles ; les faces 24e et 24f sont orthogonales aux faces 24a et 24b. De cette manière, les dispositifs de mesure peuvent être accolés par leurs faces 24e et 24f à des dispositifs de rebouclage, d'extension ou d'extrémité plus facilement. Comme indiqué plus haut, le support 20 peut présenter tout type de forme : ainsi, les faces 24e et 24f peuvent ne pas être planes mais chanfreinées ou encore par exemple présenter une forme complexe. La forme de la face 24f doit être telle qu'elle permette d'être connectée simplement et aisément à la face correspondante de liaison du dispositif de rebouclage, d'extension ou d'extrémité.

Le support 20 peut recevoir une pluralité de capteurs 22. Les capteurs 22 sont répartis de manière homogène ou pas sur toute ou partie de la longueur du support 20. Selon une forme de réalisation de l'invention, les capteurs 22 sont répartis de manière homogène. Chaque capteur 22 est séparé du capteur voisin d'une distance évitant toute interférence dans leur fonctionnement. Comme représenté sur la figure 2, les capteurs 22 sont par exemple disposés sur une même ligne 23 parallèle à la direction longitudinale du support 20. Des logements 34 sont prévus dans le support 20 pour recevoir les capteurs 22 : chaque logement 34 reçoit un capteur 22. La forme du logement 34 correspond à celle des capteurs de manière que le logement épouse sans le toucher les contours du capteur qui lui est destiné. Le logement 34 traverse le support 20 transversalement et débouche au niveau de la face 24a destinée à venir s'appliquer contre une paroi. Selon une forme de réalisation possible, les logements 34 sont réalisés par découpe par laser.

Comme illustré sur la figure 3, le support 20 présente une cavité 36 réalisée au niveau de la face 24b libre opposée à celle destinée à être en contact avec la paroi de l'aéronef. Les logements 34 des capteurs débouchent dans ladite cavité 36. La cavité 36 reçoit un circuit 28 imprimé flexible (communément appelé flex PCB de l'anglais Printed Circuit Board ou encore circuit flex). La cavité 36 présente une forme correspondant à celle du circuit 28 et épouse les formes de ce circuit. Dans l'exemple illustré, le circuit 28 présente une forme longiligne en adéquation avec celle du support 20. Dans les dispositifs de mesure 10, le circuit 28 débouche du côté de la face 24b du support 20 opposée à celle destinée à être accolée sur la paroi de l'aéronef. Dans la forme de réalisation illustrée, le circuit 28 débouche également au niveau des faces 24e et 24f. Le circuit 28 et le support 20 suivent une même direction longitudinale. L'épaisseur de la cavité 36 est telle que la surface libre du circuit 28 affleure la surface du support 20 opposée à celle destinée à venir en contact avec la paroi de l'aéronef. Le circuit 28 est disposé à l'envers dans le support 20 à savoir la face imprimée vers l'intérieur du support et la face opposée plane et lisse vers l'extérieur. De cette manière, le support 20 et le circuit 28 forme une même surface plane, lisse et souple aérodynamique permettant de limiter au minimum la perturbation de l'écoulement. Les capteurs 22 sont soudés au circuit 28 du côté de la face imprimée et lorsque le circuit 28 est inséré dans le support, les capteurs 22 sont en suspension dans les logements 34 et de ce fait, rien ne vient parasiter les mesures.

La cavité 36 est recouverte et fermée par un film 40 ou membrane de protection. Le film 40 de protection recouvre complètement et parfaitement sans dépassement les faces 24b libre et 24c, 24d latérales du support. Dans la forme de réalisation illustrée, le film 40 présente une forme rectangulaire. Il s'agit d'un film micro respirant laissant passer l'air tout en restant étanche à l'eau. Il peut être fourni en rouleaux et se présenter ainsi en un unique film d'un seul tenant, d'une seule pièce qui couvre la surface totale souhaitée. Le film 40 est fait d'un matériau antistatique permettant de conduire les charges électrostatiques qui peuvent se stocker en raison des frottements dans l'air, vers le fuselage de l'aéronef revêtu d'une peinture légèrement conductrice. Dans la forme illustrée, le film 40 de protection est réalisé en aluminium. Il s'agit d'un micro tissu d'aluminium : du fait de se présenter sous une forme tissée, il laisse passer l'air mais les mailles de taille microscopique retiennent l'eau. Le film est suffisamment souple pour suivre avec le support les contours de l'aéronef. Le film 40 est fixé au support 20 et à la paroi 12 à l'aide d'un ruban adhésif double face conducteur pour drainer les charges électrostatiques ou tout autre moyen équivalent. Par ailleurs, en recouvrant toute la surface soumise à l'écoulement, le film 40 assure au dispositif 10 une surface aérodynamique.

Le circuit 28 présente au moins un orifice 42 au droit de chaque logement 34 assurant la prise de pression nécessaire à certains types de capteurs et permettant un passage d'air entre l'écoulement d'air extérieur au dispositif 10 se trouvant au voisinage de la paroi sur laquelle le dispositif est accolé et le capteur 22. L'orifice 42 se trouve entre le capteur 22 et les parois du logement 34 dans lequel se trouve le capteur. Certains capteurs en effet comme par exemple le capteur de pression nécessitent des ouvertures vers l'écoulement d'air leur permettant de capter la différence de pression générée par l'écoulement. Ces ouvertures constituent des prises de pression. Les orifices 42 sont répartis sur le film de la même façon que les capteurs de manière que chaque capteur 22 dispose d'une prise de pression pour lui permettre de réaliser ses mesures. Du fait de pratiquer l'orifice 42 dans le circuit imprimé (en dehors de toute piste ou composant ou autre élément du circuit), il n'y a pas de déformation comme dans les architectures connus prévoyant plusieurs orifices dans une membrane souple : le circuit offre une rigidité permettant d'éviter toute déformation perturbant la prise de pression.

Le support 20 est fixé à la paroi à caractériser par tout type de moyen connu et par exemple à l'aide d'un ruban 44 adhésif double face silicone acrylique non conducteur.

La présente invention ne se limite pas au domaine aéronautique. Le système de mesure selon la présente invention pourrait être utilisé dans bien d'autres domaines techniques et par exemple dans le domaine de véhicules spatiaux, aériens, terrestres ou maritimes. Il peut également être utilisé sur un objet fixe placé dans un écoulement d'air comme par exemple une partie d'un véhicule testé en soufflerie. Il peut également servir à caractériser une soufflerie en accolant le dispositif de mesure sur une ou plusieurs parois de celle-ci.

## Revendications

1. Dispositif de mesure destiné à être accolé sur une paroi (12) d'un objet mobile ou d'un objet fixe se trouvant dans un écoulement comprenant un support (20) présentant des logements (34) dans lesquels sont logés des capteurs (22), le support présentant une face (24b) libre et une face (24a) destinée à venir en contact avec ladite paroi, la face (24b) libre étant opposée à la face (24a), le dispositif comprenant une cavité (36) dans laquelle se trouve un circuit (28) imprimé, les logements (34) étant pourvus d'une ouverture débouchant vers l'extérieur du support dans la cavité (36), **caractérisé en ce que** la cavité (36) est réalisée au niveau de la face (24b) libre à savoir qu'elle débouche dans celle-ci et **en ce que** le circuit (28) est disposé à l'envers dans la cavité, à savoir la face imprimée vers l'intérieur du support, les capteurs (22) fixés au circuit (28) se trouvant en suspension dans les logements (34).

2. Dispositif selon la revendication 1, **caractérisé en ce qu'**un film (40) micro respirant laissant passer l'air et étanche à l'eau et susceptible de drainer les charges électrostatiques vers ledit objet recouvre l'ensemble des faces (24b) libre et (24c, 24d) latérales du support.

3. Dispositif selon la revendication 2, **caractérisé en ce que** le film (40) est fixé à la paroi (12) à l'aide d'un ruban adhésif double face conducteur pour drainer les charges électrostatiques.

4. Dispositif selon la revendication 2, **caractérisé en ce que** le film (40) est un matériau aluminium tissé à mailles de taille microscopique.

5. Dispositif selon l'une des revendications 2 à 4, **caractérisé en ce que** le film (40) est fait d'une seule pièce.

6. Dispositif selon l'une des revendications 1 à 5, **caractérisé en ce que** le circuit (28) imprimé présente des orifices (42) au droit de chaque cavité (36).

7. Objet fixe ou mobile présentant une paroi se trouvant dans un écoulement pourvue d'au moins un dispositif de mesure selon l'une des revendications 1 à 6.

8. Object selon la revendication 7, **caractérisé en ce que** le support (20) est fixé à ladite paroi à l'aide d'un ruban (44) adhésif double face silicone acrylique non conducteur.

9. Objet selon l'une des revendications 7 ou 8, **caractérisé en ce qu'**il s'agit d'un aéronef.

## Patentansprüche

1. Messvorrichtung zur Anbringung auf einer Wand (12) eines beweglichen Objekts oder eines festen Objekts, das sich in einer Strömung befindet, umfassend einen Träger (20) mit Aufnahmen (34), in denen Sensoren (22) aufgenommen sind, wobei der Träger eine freie Fläche (24b) und eine Fläche (24a), die dazu bestimmt ist, mit der Wand in Kontakt zu treten, aufweist, wobei die freie Fläche (24b) der Fläche (24a) gegenüberliegt, wobei die Vorrichtung einen Hohlraum (36) umfasst, in dem sich eine Leiterplatte (28) befindet, wobei die Aufnahmen (34) mit einer Öffnung versehen sind, die zum Äußeren des Trägers in dem Hohlraum (36) mündet, **dadurch gekennzeichnet, dass** der Hohlraum (36) an der freien Fläche (24b) ausgebildet ist, und zwar dass sie in diese mündet, und dadurch, dass die Leiterplatte (28) umgekehrt in dem Hohlraum, und zwar mit der bedruckten Seite zum Inneren des Trägers, angeordnet ist, wobei sich die an der Leiterplatte (28) befestigten Sensoren (22) in Suspension in den Aufnahmen (34) befinden.

2. Vorrichtung nach Anspruch 1, **dadurch gekennzeichnet, dass** ein atmender Mikrofilm (40), der Luft durchlässt und wasserdicht ist und geeignet ist, elektrostatische Ladungen zum Objekt abzuleiten, die Gesamtheit der freien Fläche (24b) und der Seitenflächen (24c, 24d) des Trägers bedeckt.

3. Vorrichtung nach Anspruch 2, **dadurch gekennzeichnet, dass** der Film (40) mithilfe eines leitenden doppelseitigen Klebebands an der Wand (12) befestigt ist, um elektrostatische Ladungen abzuleiten.

4. Vorrichtung nach Anspruch 2, **dadurch gekennzeichnet, dass** der Film (40) ein gewebtes Aluminiummaterial mit mikroskopisch kleinen Maschen ist.

5. Vorrichtung nach einem der Ansprüche 2 bis 4, **dadurch gekennzeichnet, dass** der Film (40) einstückig ausgebildet ist.

6. Vorrichtung nach einem der Ansprüche 1 bis 5, **dadurch gekennzeichnet, dass** die Leiterplatte (28) Durchlässe (42) gegenüber jedem Hohlraum (36) aufweist.

7. Festes oder bewegliches Objekt mit einer Wand, die sich in einer Strömung befindet, die mit wenigstens einer Messvorrichtung nach einem der Ansprüche 1 bis 6 versehen ist.

8. Objekt nach Anspruch 7, **dadurch gekennzeichnet, dass** der Träger (20) mithilfe eines nichtleitenden doppelseitigen Acrylsilikon-Klebebands (44) an der Wand befestigt ist.

9. Objekt nach einem der Ansprüche 7 oder 8, **dadurch gekennzeichnet, dass** es sich um ein Luftfahrzeug handelt.

## Claims

1. Measurement device intended to be affixed to a wall (12) of a moving object or of a stationary object located in a flow comprising a support (20) having compartments (34) in which sensors (22) are housed, the support having a free face (24b) and a face (24a) that is intended to come into contact with said wall, the free face (24b) being opposite the face (24a), the device comprising a cavity (36) in which a printed circuit board (28) is located, the compartments (34) being provided with an opening that opens to the exterior of the support in the cavity (36), **characterized in that** the cavity (36) is made in the free face (24b), that is to say that it opens into same, and **in that** the circuit board (28) is arranged upside down in the cavity, that is to say with the printed face towards the interior of the support, the sensors (22) attached to the circuit board (28) being suspended in the compartments (34).

2. Device according to Claim 1, **characterized in that** a breathable microporous film (40) that is permeable to air but impermeable to water and is able to channel electrostatic charge towards said object covers the entirety of the free (24b) and lateral (24c, 24d) faces of the support.

3. Device according to Claim 2, **characterized in that** the film (40) is attached to the wall (12) using a double-sided adhesive strip that is conductive in order to channel electrostatic charge.

4. Device according to Claim 2, **characterized in that** the film (40) is a woven aluminium material with stitches of microscopic size.

5. Device according to one of Claims 2 to 4, **characterized in that** the film (40) is produced as one piece.

6. Device according to one of Claims 1 to 5, **characterized in that** the printed circuit board (28) has orifices (42) in line with each cavity (36).

7. Stationary or moving object having a wall located in a flow provided with at least one measurement device according to one of Claims 1 to 6.

8. Object according to Claim 7, **characterized in that** the support (20) is attached to said wall using a double-sided adhesive strip (44) made of non-conductive silicone-acrylic.

9. Object according to either of Claims 7 and 8, **characterized in that** it is an aircraft.
